# DEMANDE DE BREVET EUROPEEN

(11) **EP 2 933 092 A1**
(43) Date de publication de la demande: **21.10.2015**
(21) Numéro de dépôt: 14165267.7
(22) Date de dépôt: 17.04.2014
(51) Int. Cl.: B29C 65/02, B29C 63/06, B29L 31/00

(54) **Procédé et dispositif d'extrusion et étiquetage d'un tube d'emballage**

(71) Demandeur: Aisapack Holding SA, 1896 Vouvry (CH)
(72) Inventeur: Thomasset, Jacques, 1896 Vouvry (CH); Keller, Gerhard, 1896 Vouvry (CH)
(74) Mandataire: Weihs, Bruno Konrad

(57) **Abrégé**

Procédé d'extrusion et d'étiquetage d'un tube d'emballage (14) comprenant les étapes suivantes réalisées sur une ligne d'extrusion-étiquetage:
a) extrusion d'un corps tubulaire à l'état fondu (13),
b) disposition d'un film (12) autour du corps tubulaire à l'état fondu (13),
c) mise en contact de la face externe du corps tubulaire à l'état fondu (13) avec la face interne du film (12);

les étapes a) et b) étant réalisées successivement et en des endroits séparés le long de la ligne d'extrusion-étiquetage.

L'invention concerne également une ligne d'extrusion-étiquetage et un tube d'emballage.

## Description

### Domaine de l'invention

L'invention se situe dans le domaine des tubes flexibles, et plus particulièrement des tubes d'emballage pour produits liquides ou visqueux dont la jupe est obtenue par extrusion.

### Etat de la technique

Les tubes flexibles d'emballage présentent généralement deux parties distinctes, à savoir une jupe ou corps cylindrique flexible reliée à une tête comportant un goulot et fermé par un bouchon. La jupe du tube est obtenue soit par extrusion d'un corps tubulaire, soit par soudage d'une feuille multicouche.

Il existe plusieurs procédés pour ajouter la tête de tube sur l'extrémité d'une jupe préalablement extrudée. La tête de tube peut être moulée par compression ou injection et conjointement soudée sur la jupe par surmoulage. Un autre procédé consiste à pré-fabriquer la tête de tube par injection ou compression moulage, puis à assembler la tête de tube sur la jupe par soudage.

Le tube ainsi formé est ensuite décoré au niveau de la jupe. Dans certains cas, l'opération d'impression se fait avant l'assemblage de la jupe et de la tête de tube. Cette opération d'impression présente plusieurs inconvénients liés au fait que l'impression n'est pas réalisée à plat mais sur la géométrie tubulaire de la jupe. Cela conduit généralement à un procédé de plus grande complexité et par conséquent à un équipement onéreux ; à des cadences de production plus faibles, et à une flexibilité réduite. Le manque de flexibilité des machines d'impression conduit par exemple à des opérations de reprises pour des décorations complexes telles que la sérigraphie ou la décoration à chaud.

Afin de surmonter les difficultés de décoration, une méthode consiste à appliquer une étiquette adhésive pré-imprimée. L'étiquette qui est associée à un film support généralement en PET est séparée du support lors de l'application sur la surface externe du tube. L'étiquette est pré-enduite avec un adhésif collant qui lie l'étiquette à la surface du tube. La couche adhésive est protégée par le film support avant l'application de l'étiquette sur le tube.

Le procédé divulgué dans la demande de brevet WO2007/092652 consiste à appliquer une fine étiquette qui n'est pas encollée sur un film support avant utilisation. Selon cette méthode, l'opération d'enduction ou d'activation de la couche adhésive a lieu au moment de l'application de l'étiquette sur la surface du tube. Une variante de ce procédé consiste à appliquer la couche adhésive sur l'étiquette au moment de l'application. Une autre variante consiste à appliquer la couche adhésive sur la surface du tube avant application de l'étiquette. Le procédé décrit dans WO 2007/082652 présente cependant plusieurs inconvénients. L'ajout par enduction d'une couche adhésive au moment de l'application de l'étiquette ou l'ajout d'une étape d'activation rend plus complexe le procédé de fabrication, en particulier lors de l'application sur une ligne d'extrusion de tube en continu (figure 2 de WO2007092652). Un autre inconvénient réside dans les temps d'activation très courts de la couche adhésive que requiert cette méthode ce qui peut conduire à un choix restreint et coûteux d'adhésifs. Un autre inconvénient se situe au niveau de l'emballage : L'étiquette qui est ajoutée sur la surface du tube ne fait pas partie intégrante de la paroi de l'emballage. Les bords de l'étiquette sont parfois visibles ou détectables par le toucher et nuisent aux propriétés de décoration et esthétique de l'emballage.

La demande de brevet EP 0 457 561 A2 présente une méthode et un dispositif pour la confection de corps tubulaires extrudés ayant un film laminé en surface. Cette méthode consiste former un premier corps tubulaire à partir d'un film, à extruder un liner à l'intérieur dudit corps tubulaire, à étirer le liner radialement, à mettre en pression le liner contre le corps tubulaire. Cette méthode présente plusieurs inconvénients. Un premier inconvénient est lié au fait que le liner doit être extrudé à l'intérieur du corps tubulaire formé par le film. Cette opération requiert un diamètre de tube suffisamment grand pour placer dans le tube les outillages nécessaires à l'extrusion et étirage radial du liner du liner extrudé. La méthode proposée dans cette antériorité ne permet pas la réalisation de tubes de petit diamètre et en particulier de tubes de diamètre inférieur à 35mm. EP 0 457 561 A2 propose également un calibrage interne du diamètre du tube. Outre les notions d'encombrement citées précédemment, cette méthode présente l'inconvénient de générer de faibles variations du diamètre extérieur du tube. Ces variations qui dépendent de la régularité du débit de l'extrudeuse peuvent engendrer des défauts de décoration. En effet, pour obtenir une décoration de haute qualité, les extrémités du film décor qui se trouve en surface externe du corps tubulaire doivent être ajustées bout à bout. Or, les variations de débit d'extrusion citées précédemment ont pour effet de faire varier le diamètre extérieur du corps tubulaire, donc d'écarter ou rapprocher les extrémités du film décor. Ces variations engendrent des défauts visuels au niveau de la jonction des extrémités du film décor.
Il existe donc un besoin de remédier aux inconvénients précités.

### Définitions

Dans présent texte le terme « étiquetage » se réfère à la fixation d'un film, également nommé « film décor », sur un tube.
Le terme « décor » se réfère à un élément visuel à caractère informatif et/ou esthétique.

### Exposé général de l'invention

L'invention concerne un procédé, un dispositif et un tube tels que définis dans les revendications.

L'invention permet la décoration de jupes de tubes extrudés grâce à un procédé économique et flexible. Elle consiste associer des opérations d'extrusion à des opérations d'étiquetage afin d'aboutir à un corps tubulaire décoré. L'étiquette peut être constituée d'un film décor monocouche ou multicouche. Le film décor est intégré à l'emballage lors de l'extrusion à l'état fondu du corps tubulaire, de telle sorte que la surface extérieure de l'emballage décoré forme une surface continue sans aspérité. Grâce au procédé selon l'invention le décor fait partie intégrante de l'emballage contrairement à une étiquette usuelle qui serait ajoutée sur un emballage déjà formé.

De préférence, le film décor qui forme tout ou partie de la surface externe du corps tubulaire est soudé au corps tubulaire grâce à la chaleur de la résine extrudée. Selon un mode de réalisation, le film décor entre en contact avec l'extrudât fondu avant la phase de refroidissement, pendant l'étape de conformation.

Le procédé selon l'invention résulte de l'association d'un procédé d'extrusion et d'un procédé d'étiquetage. Le procédé consiste à mettre en contact ledit film autour du corps tubulaire à l'état fondu, de préférence conjointement à l'opération de conformation du film en géométrie tubulaire. Avantageusement, on calibre et refroidit la structure tubulaire multicouche résultante afin d'obtenir un tube extrudé décoré.

Selon une variante de l'invention le procédé comporte aux moins deux étapes de calibration du corps tubulaire à l'état fondu ; une première calibration consistant à appliquer la surface externe du corps tubulaire à l'état fondu contre la surface interne du film et une deuxième étape de calibration consistant à appliquer la surface externe du film destiné à former la surface externe du tube contre la surface interne du calibre. La première opération de calibration est provoquée par une différence de pression entre les surfaces interne et externe du corps tubulaire. La seconde opération de calibration est provoquée par une différence de pression entre la surface interne du corps tubulaire et la surface externe du film décor.

Le procédé selon l'invention consiste à fabriquer un tube extrudé ayant un film décor formant sa surface externe ; le corps tubulaire à l'état fondu étant déposé sur la surface interne du film décor de telle sorte que la matière fondue ne se trouve en aucun moment en contact avec les outillages refroidis. De préférence, le corps tubulaire à l'état fondu est enveloppé dans le film décor lors de son passage dans le calibre et les bacs de refroidissement successifs. La matière fondue n'est pas en frottement sur les outillages refroidis, ce qui permet d'améliorer l'esthétique des emballages produits, leur résistance aux impacts et au stress cracking.

Selon une autre variante de l'invention on utilise de deux différences de pression successives entre l'intérieur et l'extérieur du corps tubulaire pendant l'étape de conformation. La pression à l'intérieur du tube est toujours supérieure ou égale à la pression sur sa surface externe.

Une première différence de pression s'exerce entre la sortie du corps tubulaire de l'extrudeuse et l'application du film sur sa surface externe. Cette différence de pression permet d'éviter l'emprisonnement de bulles d'air entre le film décor et la surface externe du corps tubulaire. Cette différence de pression peut être créée avantageusement par un très faible débit d'air à l'intérieur du tube depuis la tête d'extrusion. Une autre méthode pour créer cette différence de pression consiste à créer une chambre de dépression entre l'extrudeuse et le bac de calibration. Un point clé de l'invention est lié à la méthode utilisée pour associer le film et le corps tubulaire extrudé. Selon cette méthode, l'association est faite au cours de la conformation du film d'une géométrie plane à une géométrie tubulaire. Ce procédé consiste à enrouler le film autour du corps tubulaire à l'état fondu conjointement au gonflage du corps tubulaire sur la surface interne du film. Selon l'invention le plan de contact (plan formé par la zone de contact) entre le film et le corps extrudé est incliné par rapport à l'axe du tube contrairement à l'art antérieur ou le plan de contact est toujours perpendiculaire à l'axe du tube.

La deuxième différence de pression est exercée pour plaquer la surface externe du tube contre la surface interne du calibre et évite la rétraction du tube lors du refroidissement. La deuxième étape permet d'ajuster avec précision le diamètre extérieur du tube. Dans le procédé selon l'invention, la surface externe du tube est formée par le film décor qui vient glisser sur la surface interne du calibre. Le tube est ensuite refroidi, coupé, selon les méthodes habituelles.

Le film décor est de préférence de fine épaisseur devant l'épaisseur du corps tubulaire extrudé.

Selon l'invention, le film décor se présente sous la forme d'un film monocouche ou multicouche. Lorsque le film décor est mis en contact avec le corps extrudé à l'état fondu, la surface du film formant l'interface avec le corps extrudé est chauffée à une température permettant de souder ledit corps cylindrique sur le film décor. Selon un mode de réalisation particulièrement avantageux, toute la chaleur nécessaire au soudage est apportée par le corps extrudé. Du fait de sa fine épaisseur, le film décor est refroidi sur sa surface externe conjointement à l'opération de soudage. Le refroidissement se fait par contact de la surface externe du film décor sur la surface du calibre ou par contact avec de l'eau. Le refroidissement du film décor conjointement à l'opération de soudage permet de préserver la qualité du décor ainsi que les propriétés de surface dudit film (brillance, matité, rugosité...).

Selon un autre mode de réalisation de l'invention, le film décor est intégré dans l'épaisseur de l'emballage et couvre toute la surface extérieure du corps extrudé.

Selon un autre mode de réalisation de l'invention, le film décor ne forme qu'une partie de la circonférence du corps tubulaire, ses bords sont emprisonnés par la résine extrudée de telle sorte que la surface externe du corps tubulaire forme une surface continue.

Le film décor peut apporter de la décoration à l'emballage. Il peut également apporter des propriétés de surface modifiant le toucher de l'emballage. A cet égard, l'invention permet d'apporter en surface de l'emballage d'autres matières impossible ou difficile à extruder telles que du papier, des textiles, des résines « soft touch », etc.

Un autre avantage de l'invention est de faciliter l'extrusion de grades de résines difficile à extruder car générant des phénomènes de « stick and slip » lors du calibrage ou générant des défauts de surface, ou encore des ruptures d'extrudat.

De manière plus générale, l'invention peut être utilisée pour augmenter la productivité car la matière fondue n'est plus en contact direct avec la surface du calibre. Les frottements de la matière fondue sur le calibre que l'on retrouve dans un procédé classique d'extrusion sont supprimés si bien que la vitesse de production peut être augmentée.

Un autre avantage de l'invention est l'amélioration des propriétés mécaniques des tubes formés grâce aux propriétés de surface apportées par le film. La résistance aux chocs, et au stress cracking des tubes est ainsi améliorée.

Les emballages résultants de ce procédé de fabrication présentent l'avantage d'une très forte cohésion entre le film décor et le corps extrudé. Les risques de décollement du film décor lors de l'usage de l'emballage sont écartés contrairement aux emballages de l'art antérieur produits avec une étiquette adhésive. Un autre avantage est lié à l'absence de discontinuité à la surface du corps tubulaire qui permet d'éviter les désagréments liés aux étiquettes dont les tranches peuvent accumuler la poussière et nuire aux propriétés esthétiques.

L'invention permet en outre de réaliser des tubes décorés de faible ou grand diamètre. Elle offre une très grande flexibilité, et peut faire l'objet de nouvelles installations ou permettre la modification d'installations d'extrusion existantes.

L'invention consiste également en un dispositif d'extrusion-étiquetage. Selon un mode de réalisation de l'invention, le dispositif comprend des moyens d'extrusion d'un corps tubulaire à l'état fondu ; un bac de calibration et refroidissement sous vide ; des moyens d'entrainement du tube refroidi ; des moyens de coupe ou d'enroulement et des moyens pour dérouler un film ; un conformateur en col de cygne disposé entre la tête d'extrusion et la bac de calibration sous vide ; des moyens pour exercer une première différence de pression entre l'intérieur et l'extérieur du corps tubulaire extrudé lors de son passage dans le conformateur en col de cygne ; des moyens pour exercer une deuxième différence de pression entre l'intérieur et l'extérieur du tube lors de son passage dans le bac de calibration sous vide.

Selon une variante de l'invention, le film décor passe au travers d'un conformateur en col de cygne positionné entre la tête d'extrusion et le bac de calibrage. Grâce au conformateur en col de cygne, le film décor ne passe pas dans les outillages d'extrusion ce qui évite la dégradation du film décor. Dans la présente invention, le conformateur en col de cygne peut en outre être avantageusement utilisé pour assembler le film et le corps tubulaire extrudé. Le conformateur en col de cygne, associé à une différence de pression entre l'intérieur et l'extérieur du corps extrudé, permet de déposer progressivement le film sur la surface externe du corps extrudé. Un grand avantage du dispositif est la possibilité de positionner le conformateur en col de cygne à proximité de la tête d'extrusion afin de prendre en charge le corps tubulaire extrudé dès sa sortie de l'outillage. Le corps tubulaire est déposé sur le film qui glisse sur le col de cygne et entraine conjointement le corps extrudé. La compacité du conformateur en col de cygne est d'un grand avantage. Ce conformateur peut être inséré facilement entre la tête d'extrusion et le bac de calibration.

### Brève description des figures

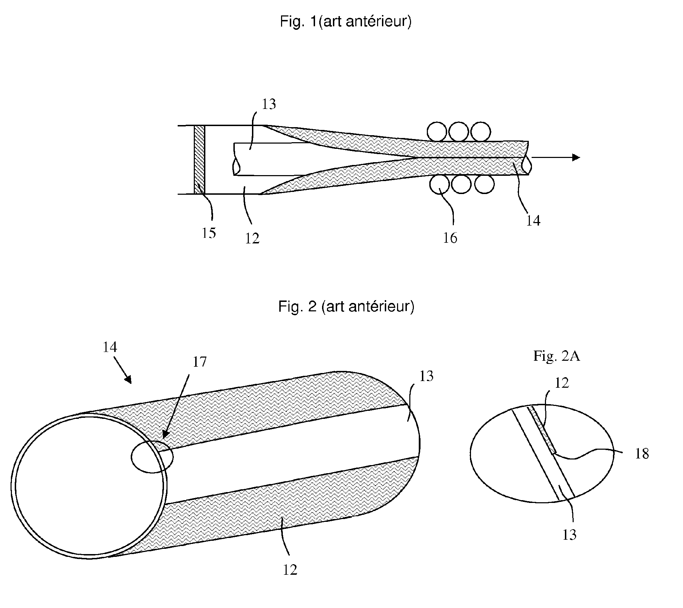

La figure 1 décrit un procédé de l'art antérieur décrit dans la demande de brevet WO2007092652 et qui consiste à ajouter en surface d'un tube extrudé 13 une étiquette non encollée 12 grâce à une étape d'application d'une couche adhésive 15 juste avant assemblage de l'étiquette 12 sur la surface du tube 13.
La figure 2 illustre un tube 14 de l'art antérieur produit avec le procédé décrit dans la demande WO2007092652. L'étiquette 12 n'est pas encastrée dans le corps tubulaire extrudé 13. Les bords 18 de l'étiquette 12 créent une discontinuité de la surface extérieure de l'emballage qui nuit à l'esthétique.
La figure 3 décrit une variante de réalisation du procédé selon l'invention. Ce procédé consiste à associer des opérations d'extrusion et des opérations d'étiquetage.
La figure 4 illustre un procédé selon l'invention et un exemple de dispositif consistant à extruder un corps tubulaire 13, et à déposer à la surface dudit corps tubulaire un film décor 12.
La figure 5 montre un tube 14 obtenu avec le procédé décrit dans l'invention. Les extrémités 18 du film décor 12 sont encastrées dans le corps extrudé 13.
La figure 6 illustre une vue en coupe partielle d'un tube 14 comprenant un film décor 12 en surface dont les extrémités 18 et 18' sont disposées bout à bout. Les extrémités 18 et 18' sont encastrées dans le corps extrudé 13.
La figure 7 montre une variante d'un tube 14 comprenant un film décor 12 dont les extrémités 18 et 18' sont disposées bout à bout. Selon cette variante, les extrémités 18 et 18' sont en contact et la surface externe du tube 14 forme une surface lisse continue.

### Exposé détaillé de l'invention

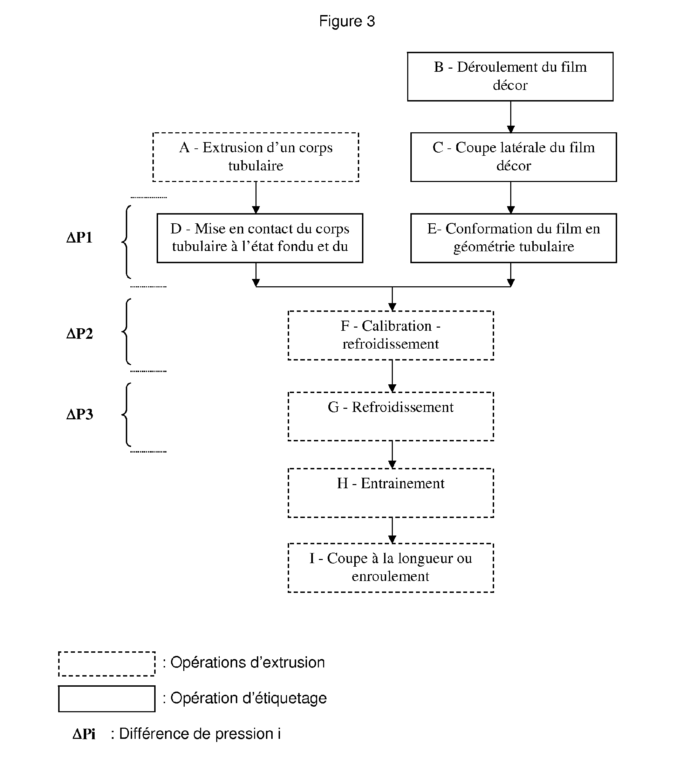

La figure 3 décrit un exemple de procédé selon l'invention qui consiste former un tube décoré en déposant un film décor sur la surface d'un tube extrudé alors que le corps extrudé est à l'état fondu. Le procédé associe avantageusement des opérations d'extrusion A, F ,G ,H et I et les opérations d'étiquetage B, C, D et E.

La première opération d'extrusion A consiste à former un corps tubulaire à l'état fondu avec les moyens connus d'extrusion. Ces moyens comportent généralement une ou plusieurs extrudeuses et une tête d'extrusion ou co-extrusion.

En parallèle de l'opération d'extrusion A, les opérations d'étiquetage B et C consistent respectivement à dérouler un film décor disposé en bobine (l'étiquette), puis éventuellement à découper latéralement les bords du film décor afin d'ajuster l'étiquette au diamètre du tube fabriqué.

L'opération D consiste à mettre en contact la surface externe du corps tubulaire à l'état fondu sur la surface interne du film décor. L'opération d'étiquetage E permet de conformer le film décor en géométrie tubulaire. Dans cet exemple, les opérations D et E sont réalisées simultanément. La mise en contact entre le corps tubulaire à l'état fondu et le film décor se fait conjointement à l'enroulement du film décor autour du corps tubulaire. Un grand avantage de ce mode de réalisation est la compacité des moyens utilisés pour réaliser les opérations D et E. Le moyen utilisé pour l'opération E est préférentiellement un conformateur en col de cygne qui permet dans un encombrement réduit de disposer le film décor autour du corps tubulaire à l'état fondu. Le moyen utilisé pour l'opération D est une différence de pression ΔP1 entre l'intérieur et l'extérieur du corps tubulaire à l'état fondu. Une méthode préférentielle pour exercée cette différence de pression est de générer un faible écoulement d'air à l'intérieur du corps tubulaire permettant de « gonfler » le corps tubulaire à l'état fondu contre le film décor lors de son passage dans le col de cygne. Une autre méthode consiste à exercer une dépression dans un caisson disposé autour du col de cygne. Le diamètre du corps tubulaire étiqueté à la sortie du col de cygne est sensiblement équivalent au diamètre du tube que l'on fabrique.

L'opération F qui intervient après les opérations D et E. Elle permet de calibrer le diamètre extérieur du tube étiqueté. L'opération F est obtenue par le passage du tube extrudé dans un bac de calibration comportant des moyens de refroidissement et de calibration. Une différence de pression ΔP2 entre l'intérieur et l'extérieur du tube est exercée pendant l'opération F. Cette différence de pression plaque la surface externe du tube contre la surface interne du calibre conjointement au refroidissement du tube. Préférentiellement, la différence de pression ΔP2 est créée par une dépression créée à l'extérieur du tube dans le bac de calibration. De l'eau est généralement utilisée pour refroidir le tube, soit sous forme de bain, soit sous forme de douche. Un grand avantage du procédé est lié au fait que la tribologie lors de l'opération de calibration est sensiblement modifiée en comparaison avec un procédé d'extrusion classique. En effet dans notre procédé, la matière plastique à l'état fondu ne se trouve plus en contact avec le calibre lorsque l'étiquette est disposée tout autour du corps tubulaire. Cela présente de nombreux avantages en plus des avantages liés à la décoration en ligne :
- Possibilité d'augmentation de la vitesse de production sans création de défauts
- Elargissement de la gamme des résines possibles pour fabriquer des tubes
- Amélioration de la résistance des tubes au stress cracking et aux chocs car les propriétés du tube sont modifiées par les propriétés du film en surface

L'opération G est optionnelle. Elle permet de parfaire le refroidissement du tube tout en gardant le diamètre constant. L'opération G est utile surtout lorsque l'épaisseur du tube est importante et si à l'issu de l'opération F le tube n'est pas suffisamment refroidi. Lors de l'opération de refroidissement G, une différence de pression ΔP3 entre l'intérieur et l'extérieur du tube peut être utilisée pour maintenir constant le diamètre du tube pendant le refroidissement. L'opération G est couramment utilisée en extrusion de tube selon les méthodes classiques.

L'opération H est une opération que l'on retrouve de façon classique en extrusion de tube. Elle consiste à entraîner le tube formé.

L'opération I consiste à couper le tube à la longueur désirée. L'opération de coupe est synchronisée avec la décoration du tube.

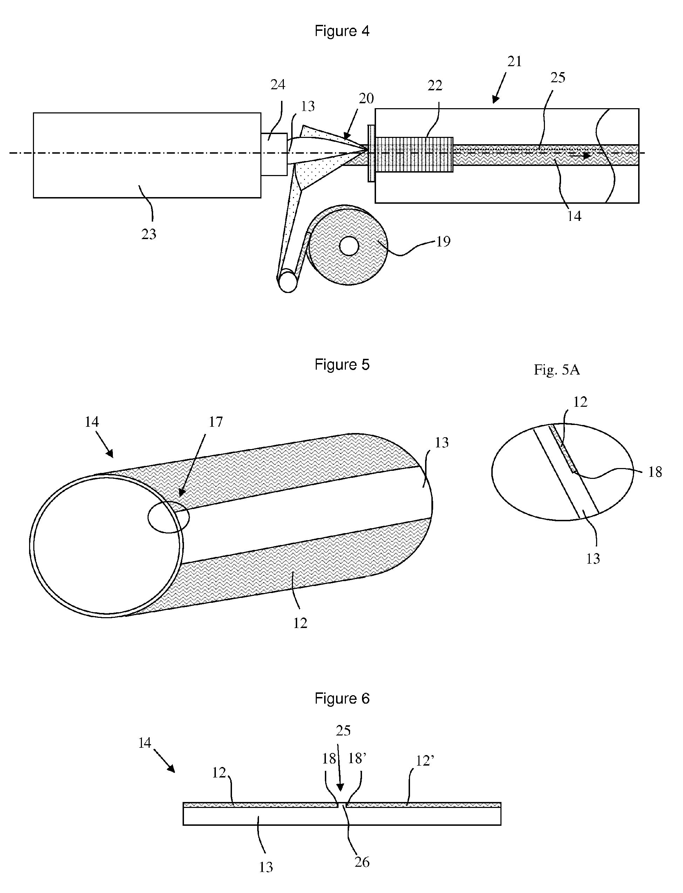

La figure 4 illustre une variante du procédé selon l'invention et un exemple de dispositif. Ce procédé consiste à extruder un corps tubulaire 13, et à déposer sur la surface externe dudit corps tubulaire à l'état fondu un film décor 12.

Le procédé comprend l'extrusion du corps tubulaire 13 selon les méthodes connues dans l'industrie des plastiques. La figure 3 illustre le procédé le plus répandu qui consiste à utiliser une extrudeuse 23 permettant de faire fondre la résine thermoplastique puis à la mettre en forme dans un outillage 24. Le corps tubulaire extrudé 13 ainsi obtenu peut être monocouche ou multicouches.

Le procédé comprend l'usage d'un film décor 12 conditionné en rouleaux 19. Le film décor est déroulé dans un procédé continu à la vitesse linéaire de fabrication du tube. Il est ensuite conformé en géométrie tubulaire autour du corps tubulaire extrudé à l'état fondu 13 par l'intermédiaire d'un conformateur en col de cygne 20. Un grand avantage de l'invention est lié au fait que le film 12 est totalement séparé de l'unité d'extrusion 23 et de l'outillage 24 ce qui permet d'éviter de soumettre le film 12 à des températures élevées et d'éviter la dégradation du décor. Le conformateur 20 peut être de très faible encombrement, et s'insère entre le dispositif d'extrusion 23, 24 et le dispositif de calibration 22 et refroidissement 21 du tube 14. Un conformateur de type col de cygne peut être avantageusement utilisé.

Avantageusement, l'assemblage du corps tubulaire 13 et du film décor 12 se fait lorsque le corps tubulaire 13 est à l'état fondu de sorte que la chaleur du corps extrudé fasse fondre la surface interne du film décor 12. Le temps de contact sans refroidissement actif entre le corps tubulaire fondu 13 et le film décor 12 est ajusté pour permettre un soudage optimal sans dégradation du décor. Ce temps est optimisé en fonction du film 12 utilisé (épaisseur, nombre de couches, nature des couches, position du décor dans l'épaisseur, nature des encres, pigments, etc...) et du corps tubulaire extrudé 13 (épaisseur, nombre de couches, nature des couches). En général, ce temps est très court et le refroidissement actif par la surface externe du tube 14 peut être activé rapidement après assemblage du corps tubulaire et du film décor. Généralement, le refroidissement de la surface externe du tube 14 se fait dès entrée du tube 14 dans le conformateur ce qui permet de préserver la qualité d'impression du film décor. En fonction de l'épaisseur du film décor, l'opération de refroidissement par la surface externe du tube 14 peut être effectuée après l'opération de calibration. Dans le procédé selon l'invention, la surface externe du film décor n'est pas fondue au cours de la fabrication du tube 14. En particulier, la surface décorée est maintenue à une température au moins inférieure à la température de fusion de la couche support ou inférieure à la température de dégradation des encres ou pigments.

Selon un autre mode de réalisation de l'invention, le diamètre externe du tube 14 formé par le corps tubulaire à l'état fondu 13 et le film décor 12 est calibré par le passage dudit tube 14 dans le calibre 22 et par l'action simultanée d'une différence de pression exercée entre la surface interne et la surface externe du tube 14. Cette différence de pression apparait lors de l'entrée du tube 14 dans le bac de calibration 21, et a pour effet de plaquer la surface externe du tube 14 contre la surface interne du calibre 22. La surface externe du film décor qui n'est pas fondue se retrouve donc en contact avec la surface du calibre.

Une particularité de ce mode de réalisation réside dans le fait que la surface de calibration du tube 14 formée par la surface externe du film décor 12 n'est pas à l'état fondue, ce qui a pour effet de faciliter l'opération de calibration du diamètre externe du tube. Les propriétés tribologiques entre la surface interne du calibre et la surface externe du tube sont radicalement modifiées par rapport à une opération d'extrusion classique. Le procédé permet ainsi l'utilisation de nouvelles matières extrudées ou l'augmentation des vitesses d'extrusion.

La figure 5 illustre les tubes 14 obtenus par le procédé. Le film décor 12 forme tout ou partie de la surface externe du tube 14. Le détail 7 montre l'incrustation de l'extrémité 18 du film décor dans la paroi du corps extrudé 13. Il y a continuité de la surface externe du tube 14 au niveau de l'extrémité du film décor 12. L'épaisseur du film décor est faible devant l'épaisseur du corps extrudé 13.

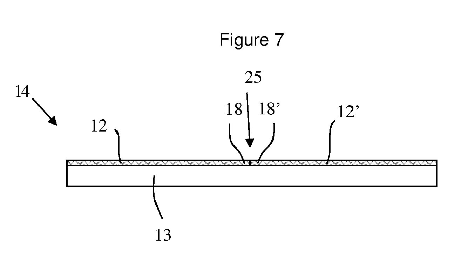

Les figures 6 et 7 illustrent la réalisation de l'invention avec un film décor sur toute la périphérie du tube.

La figure 6 montre un premier mode de réalisation d'une décoration 360° du tube ou les extrémités 18 et 18' du film décor 12 sont disposées bout à bout et légèrement espacées. L'espacement des extrémités du film décor peut être lié à la précision de la coupe latérale du film décor. De faibles espacements 25 des extrémités 18 et 18' inférieurs à 100 microns et invisibles à l'oeil nu sont parfois obtenus. L'espacement 25 est comblé par la résine formant le corps extrudé 13, créant ainsi une surface externe du tube 14 lisse et sans discontinuité au niveau des extrémités 18 et 18'.

La figure 7 illustre un deuxième mode de réalisation ou les extrémités 18 et 18' du film décor 12 sont disposées bout à bout et mises en contact. Dans cette configuration, on observe une continuité du film décor et de la surface externe du tube 14. Comme l'épaisseur du film décor 12 est faible devant l'épaisseur du corps extrudé 13, les extrémités 18 et 18' sont imperceptibles. Ce mode de réalisation est particulièrement intéressant pour assurer une décoration 360° ou assurer la continuité des propriétés barrières lorsque la couche barrière est portée par le film décor. Ce second mode de réalisation peut nécessiter des moyens de coupe latérale du film décor 12 situés en amont du conformateur 20. Ces moyens de coupe permettent un ajustement précis de la largeur du film décor pour obtenir le positionnement bout à bout illustré figure 7.

Le corps tubulaire extrudé ou co-extrudé 13 est généralement composé de résine thermoplastique de la famille des polyoléfines (par exemple polyéthylène basse densité linéaire, polyéthylène basse densité , polyéthylène haute densité, mélanges de polyéthylène, polypropylène), mais l'invention ne se limite pas à l'usage des résines précédemment décrites. Par exemple, la structure multicouche avec une résine d'éthylène vinyle alcool comme barrière à l'oxygène et une résine polyoléfine est couramment utilisée pour améliorer les performances barrières de l'emballage. Le corps tubulaire 13 représente au moins 70% de l'épaisseur du tube 14 et préférentiellement au moins 80% de l'épaisseur du tube 14.

Le film décor 12 forme au moins une partie de la surface externe du tube 14. Ce film décor permet par exemple l'identification du produit emballé, du fabricant, apporte la décoration, etc. Selon le mode préférentiel de réalisation, le film décor est de fine épaisseur. Il est monocouche ou multicouche et peut être composé d'une grande variété de matière incluant le papier, l'aluminium et les matières plastiques. Le film support peut également être composé en partie d'un film textile pour apporter des propriétés sensorielles spécifiques. Ce film décor comprend au moins une couche qui sous l'effet de la chaleur apporté par le corps extrudé 13 permet l'adhésion du film décor sur ledit corps extrudé. Le film décor est préférentiellement multicouche. La structure multicouche peut comprendre par exemple des couches en polyéthylène, polypropylène, polyéthylène téréphtalate, polyamide, éthylène vinyle alcool, papier, aluminium, des couches de métallisation ou d'oxyde de silicium, des couches adhésives, etc. Préférentiellement l'épaisseur du film décor est comprise entre 5 et 100 microns, et avantageusement entre 10 et 50 microns.

Le fil décor 12 peut être imprimé selon toutes les méthodes connues d'impression à plat comme par exemple, la flexographie, la sérigraphie, l'héliogravure, l'impression par typographie, l'impression offset, ou encore l'impression digitale et combinaison de ces technologies d'impression. L'invention sera associée avantageusement à l'impression numérique pour les productions nécessitant flexibilité et changement rapide de décoration.

L'invention peut être avantageusement associée à une impression numérique en ligne du film décor 12. Dans ce cas de figure, le rouleau de film décor 19 illustré figure 4 est remplacé par une machine d'impression numérique fonctionnant de manière synchronisée avec la ligne d'extrusion étiquetage. Selon une variante de cette configuration, une ou plusieurs opérations de complexage peuvent être également effectuées en ligne avant le procédé d'extrusion décoration. Par exemple une opération de complexage est nécessaire lorsque l'on souhaite que l'impression se retrouve emprisonnée dans l'épaisseur du film décor 12. Une configuration possible permettant d'avoir la couche imprimée emprisonnée résulte de la succession des étapes suivantes :
- Déroulement d'un premier film non décoré
- Impression numérique du premier film
- Complexage d'un deuxième film sur le premier film afin d'emprisonner l'impression - Obtention du film décor
- Découpe latérale des bords du film décor
- Procédé d'extrusion décoration

L'impression du film décor 12 peut être réalisée en surface ou en reverse de telle sorte que l'impression se retrouve en surface du tube 14 ou emprisonnée dans l'épaisseur du tube. L'impression est avantageuse pour réaliser des décorations complexes à moindre coût car l'opération de décoration est réalisée à plat sur un film de fine épaisseur.

L'invention est particulièrement avantageuse pour réaliser à moindre coût des tubes avec une décoration de haut de gamme.

L'invention est particulièrement avantageuse pour améliorer les propriétés sensorielles des tubes en apportant avec le film décor une couche de surface ayant un « toucher » particulier. Ces propriétés sont apportées par exemple par un film polypropylène biorienté mat, ou un film textile.

L'invention est particulièrement avantageuse car elle permet de modifier la fonctionnalité de l'emballage en changeant de film décor. Ces fonctionnalités peuvent être d'ordre esthétique (décoration), sensorielles (toucher), techniques (propriétés barrières) ou informatives (communication sur l'emballage).

L'invention est particulièrement avantageuse car le film décor fait partie intégrante de l'emballage. Il est intégré dans sa structure et contribue à ses propriétés.

L'invention ne se limite pas à la réalisation des quelques exemples de structures multicouches cités dans le texte. Il est évident pour l'homme du métier que l'invention permet d'augmenter le nombre de structure réalisable et permet l'association de matières très différentes (plastiques, papier, aluminium, ...). L'invention permet par défaut de réaliser des corps tubulaires sans décoration mais comportant un film en surface. Cette variante peut être utilisée plus spécifiquement pour améliorer les propriétés mécaniques, barrières ou sensorielles (toucher) des tubes.

L'invention peut être utilisée dans le domaine de l'emballage principalement pour l'apport d'un décor mais également dans des domaines techniques pour l'amélioration des propriétés mécaniques ou barrières.

Pour l'extrusion de produit difficile, l'invention peut être utilisée pour diminuer les coûts de production en augmentant la vitesse de production.

L'invention permet de réaliser des tubes monocouches ou multicouches avec une étiquette en surface. Un premier cas particulier de réalisation de l'invention est la réalisation de tubes d'emballage selon le procédé suivant :
- Réalisation par soudage d'un premier corps tubulaire à partir d'un film monocouche ou multicouche
- Extrusion d'un deuxième corps tubulaire à l'état fondu sur ledit premier corps tubulaire
- Conjointement, dépôt de l'étiquette sur la surface externe du second corps tubulaire selon le procédé de l'invention.

Un second cas particulier de l'invention consiste à emprisonner l'étiquette dans la paroi du tube. Pour cela, le procédé suivant est mis en oeuvre :
- Extrusion d'un premier corps tubulaire à l'état fondu
- Conjointement, dépôt de l'étiquette sur la face externe du premier corps tubulaire selon le procédé de l'invention
- Puis, extrusion d'un deuxième corps tubulaire et dépôt dudit deuxième corps tubulaire à l'état fondu sur la face externe de l'étiquette.

Le second corps tubulaire à l'état fondu est déposé sur la face externe de l'étiquette préférentiellement lorsque le premier corps tubulaire est au moins partiellement refroidi.

## Revendications

1. Procédé d'extrusion et d'étiquetage d'un tube d'emballage (14) comprenant les étapes suivantes réalisées sur une ligne d'extrusion-étiquetage:
a) extrusion d'un corps tubulaire à l'état fondu (13),
b) disposition d'un film (12) autour du corps tubulaire à l'état fondu (13),
c) mise en contact de la face externe du corps tubulaire à l'état fondu (13) avec la face interne du film (12);
les étapes a) et b) étant réalisées successivement et en des endroits séparés le long de la ligne d'extrusion-étiquetage.

2. Procédé selon la revendication 1 dans lequel les opérations b) et c) sont réalisées simultanément.

3. Procédé selon la revendication 1 ou 2 dans lequel l'étape a) est suivie d'une phase de refroidissement dudit corps tubulaire (13) et que l'étape c) est réalisée avant ladite phase de refroidissement.

4. Procédé selon l'une quelconque des revendications précédentes dans lequel l'étape c) est induite par une différence de pression entre les surfaces interne et externe du corps tubulaire (13).

5. Procédé selon l'une quelconque des revendications précédentes dans lequel l'étape b) ou l'étape c) est suivie d'une calibration de la surface externe du tube (14).

6. Procédé selon la revendication 5 dans lequel la calibration est créée par une différence de pression entre la surface externe du film (12) et la surface interne du corps tubulaire (13).

7. Procédé selon l'une quelconque des revendications précédentes comprenant en outre l'étape suivante réalisée avant l'étape a) :
- Réalisation par soudage d'un corps tubulaire de base à partir d'un film monocouche ou multicouche ;
ledit corps tubulaire à l'état de fondu (13) étant extrudé sur le corps tubulaire de base.

8. Procédé selon l'une quelconque des revendications précédentes comprenant en outre l'étape suivante réalisée après l'étape c) : Extrusion d'un deuxième corps tubulaire et dépôt dudit deuxième corps tubulaire à l'état fondu sur la face externe du film.

9. Procédé selon la revendication 8 dans lequel le deuxième corps tubulaire est déposé sur le film lorsque le premier corps tubulaire est au moins partiellement refroidi.

10. Ligne d'extrusion-étiquetage comprenant:
a) des moyens d'extrusion (23,24) d'un corps tubulaire à l'état fondu (13),
b) des moyens de disposition (20) d'un film (12) autour du corps tubulaire à l'état fondu (13),
c) des moyens de mise en contact de la surface externe du corps tubulaire à l'état fondu (13) avec la surface interne du film (12);
les moyens d'extrusion et les moyens de disposition sont agencés successivement le long de la ligne d'extrusion-étiquetage.

11. Dispositif selon la revendication 10 dans lequel les moyens de disposition comprennent un col de cygne (20) et dans lequel les moyens de mise en contact comprennent un générateur de pression de gaz à l'intérieur du corps tubulaire.

12. Dispositif selon la revendication 10 ou 11 comprenant des moyens de calibration (22).

13. Dispositif selon la revendication 12 dans lequel les moyens de disposition (20) sont localisés entre les moyens d'extrusion et les moyens de calibration (22).

14. Tube d'emballage extrudé et étiqueté obtenu selon le procédé de l'une quelconque des revendications 1 à 7, **caractérisé par le fait que** le film (12) est incrusté dans la paroi du corps tubulaire (13).
